# EUROPÄISCHE PATENTANMELDUNG

(11) **EP 1 553 722 A1**
(43) Veröffentlichungstag der Anmeldung: **13.07.2005**
(21) Anmeldenummer: 04250096.7
(22) Anmeldetag: 09.01.2004
(51) Int. Cl.: H04L 12/24, H04Q 3/00, H04Q 7/34

(54) **Verfahren und Agent zur Überwachung von Verbindungen in einem Managementsystem eines Kommunikationsnetzes mittels eines Heartbeat-Service**

(71) Anmelder: SIEMENS AKTIENGESELLSCHAFT, 80333 München (DE)
(72) Erfinder: Gaigg, Peter, Dr., 1040 Wien (AT); Pollakowski, Olaf, Dr., 10629 Berlin (DE); Suerbaum, Clemens, 81371 München (DE)

(57) **Zusammenfassung**

Die Erfindung betrifft ein Verfahren zur Überwachung von Verbindungen in einem Managementsystem eines Kommunikationsnetzes, wobei das Managementsystem mehrere Manager (NMC₁, NMC₂, NMC₃, NMCₖ) und zumindest einen Agenten (OMC₁, OMC₂, OMC₃, OMCₙ) als Einrichtungen in verschiedenen Managementebenen (NM LEVEL, EM LEVEL) umfasst, wobei der Agent an zumindest zwei mit ihm verbundene Manager (NMC₁, NMC₂, NMC₃, NMCₖ) periodische Notifikationen eines Heartbeat-Service sendet. Erfindungsgemäß wird den zumindest zwei Managern eine unterschiedliche Periode für die Notifikationen des Heartbeat-Service vom zumindest einen Agenten zugeordnet. Ferner werden zahlreiche Varianten dieses Verfahrens vorgeschlagen.

## Beschreibung

Die Erfindung betrifft ein Verfahren zur Überwachung von Verbindungen in einem Managementsystem eines Kommunikationsnetzes nach dem Oberbegriff des Anspruchs 1.

Die Erfindung betrifft ferner einen Agenten eines Managementsystems eines Kommunikationsnetzes zur Überwachung von Verbindungen im Mangementsystem nach dem Oberbegriff des Anspruchs 17.

Die Erfindung betrifft schließlich ein Managementsystem eines Kommunikationsnetzes zur Überwachung von Verbindungen im Managementsystem nach dem Oberbegriff des Anspruchs 25.

Die Prinzipien des Management eines Telekommunikations-Netzes, die auch als TMN-Prinzipien (TMN: Telecommunications Management Network) bezeichnet werden, definieren mehrere Managementschichten für das Management des Telekommunikations-Netzes - beispielsweise eines Mobilfunk-Kommunikations-Netzes -, wobei jede Schicht mit Ausnahme der obersten und der untersten Schicht eine doppelte Funktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine Agenten-Funktion für die nächsthöhere Schicht zu.

Einzelne Einrichtungen bzw. Elemente des Telekommunikations-Netzes (Netz-Ressourcen) üben in einer TMN-Hierarchie die Rolle eines Agenten aus. Agenten müssen relevante Ereignisse (sogenannte *events,* z.B. Alarme) im Netz möglichst rasch erkennen, ensprechende Mitteilungen oder Notifikationen - sogenannte *Notifications -* generieren und diese Ereignismeldungen (*event reports*) an Manager übertragen, um ein effizientes Netzmanagement zu ermöglichen.

Das Managementsystem eines Kommunikationsnetzes umfasst in der Regel zumindest zwei Managementeinrichtungen in verschiedenen Managementebenen, wobei mindestens eine der zumindest zwei Managementeinrichtungen als Element Manager oder Netzelement und mindestens eine der zumindest zwei Managementeinrichtungen als übergeordneter Netzwerk Manager fungieren. Element Manager fungieren gegenüber einer tieferen Ebene als Manager und wirken im Hinblick auf die nächsthöhere Managementebene der Netzwerk Manager als Agenten.

Ein solches Managementsystem für ein Mobil-Kommunikationsnetz mit Agent-Manager-Beziehung umfasst beispielsweise Betriebsund Wartungszentren (OMC Operation and Maintenance Center) und mehrere Netzwerkmanagementzentren (NMC Network Management Center). Zusätzlich kann beispielsweise eine Managementebene des Managementnetzes, welche die Netzelementsebene ("Network Element Level") mit mehreren Basisstationssystemen enthält, vorgesehen sein. In der Netzelementsmanagementebene ("Network Element Management Level") können beispielsweise Betriebsund Wartungszentren jeweils die herstellerspezifische Managementfunktionalität für beispielsweise einzelne Basisstationen des Basisstationssystems bereitstellen. In der Netzwerkmanagementebene ("Network Management Level") realisieren Netzwerkmanagementzentren jeweils eine integrierte, in der Regel vom Hersteller unabhängige Management-Funktionalität. Dabei können mehrere Netzwerkmanagementzentren einen Zugriff zu derselben Netzeinrichtung der nächstniedrigeren Managementebene, der Netzelementsmanagementebene ("Network Element Management Level"), haben, beispielsweise die Netzmanagementzentren zu mindestens einem Betriebs- und Wartungszentrum der nächstniedrigeren Managementebene.

Zwischen den Netzeinrichtungen unterschiedlicher Managementebenen sind üblicherweise definierte Schnittstellen zur Informationsübertragung bei der Manager-Agent Kommunikation vorgesehen, so genannte Management-Schnittstellen, die in einer objekt-orientierten Umgebung durch ein Kommunikationsprotokoll (z. B. CMIP (Common Management Information Protocol nach ITU-T X.711) oder CORBA (Common Object Request Broker Architecture)) und ein Objektmodell gekennzeichnet werden. Solche Schnittstellen gibt es beispielsweise zwischen *Network Element Management*- und *Network Element-Ebene* (z. B. OMC-BSS (BSS Basestation Subsystem) in einem GSM Mobilfunknetz) bzw. zwischen *Network Management*- und *Network Element Management*-Ebene (z.B. NMC-OMC).

Das optimale Management eines Telekommunikationsnetzes setzt voraus, dass nur die relevanten Ereignismeldungen aus den untergeordneten Agenten möglichst schnell an Manager-Systeme weitergeleitet werden. Unter Normalbedingungen, d. h. wenn die Kommunikation zwischen Agenten und Managern funktioniert, geschieht dies über einen im Agent vorhandenen Filtermechanismus (beispielsweise in einer CMIP-basierten Management-Schnittstelle mit Hilfe von *Event Forwarding Discriminators,* so genannten *EFDs,* gemäß ITU-T X.734 "*Systems Management: Event Report Management Function*"). Die Aufgabe dieser Filter ist es, nur diejenige Notifikationen zum Manager weiterzuleiten, welche bestimmten Kriterien genügen. Ein Manager ist in der Lage, solche Filter im Agent einzurichten oder zu löschen und die Filterkriterien festzulegen. Dadurch kann in der Regel jeder Manager den Informationsfluss nach seinen individuellen Anforderungen steuern.

Der Standard ITU-T (International Telecommunications Union - Telecommunication standardisation sector) Q.816 "CORBA-based TMN services" definiert für das Management von Telekommunikations-Netzen nach Telekommunikationsnetzen einen Mechanismus (Heartbeat-Service) zur Überwachung der Verbindung zwischen einem gemanagten System (managed-system) und einem managenden System (managing system). Dieser Heartbeat-Service soll sicherstellen, dass die Verbindung in der Richtung von Agent zu Managern nicht unbemerkt abreißt. Beim Heartbeat-Service wird periodisch eine sogenannte Heartbeat-Notifikation an alle angeschlossenen Ereigniskanäle (Event Channel) gesendet, welche wiederum die Notifikation an das managende System weiterleiten. Gemäß Standard ITU-T Q.816 sind Ereigniskanäle unterstützende Objekte in einem managenden System mit einem oder mehreren Schnittstellen, welche einem managenden System erlauben Notifikationen vom gemanagten System zu empfangen. Der Begriff der Notifikation ist beispielsweise im Standard ITU-T X.703 definiert.

Die Periode für die Notifikationen des Heartbeat-Service - die Heartbeat-Periode - kann vom Manager mit Hilfe einer speziellen Operation (Operation *periodSet*) beliebig eingestellt werden. Eine andere Operation (Operation periodGet) erlaubt es dem Manager, die Heartbeat-Periode zu lesen.

Der Standard ITU-T Q.816 sieht zwar grundsätzlich die Möglichkeit vor, mehrere Ereigniskanäle (Event Channel) zu instantiieren, implizit geht der Standard aber allerdings davon aus, dass alle Ereigniskanäle mit nur einem einzigen Manager verbunden sind.

In den Standardisierungsaktivitäten der 3GPP SA5 (Telecom Management) wird zur Zeit für Release 6 ein Standard erarbeitet(aktuelle Fassung 3GPP TS 32.352 V1.0.0 vom Dezember 2003), der das Thema Kommunikationsüberwachung (Communication Surveillance IRP Information Service, mit: IRP Integration Reference Point) betrifft. Diese Arbeiten zum Informationsservice der Kommunikationsüberwachung IRP bauen auf dem oben beschriebenen Heartbeat-Mechanismus auf.

Im Unterschied zur standardisierten Variante nach ITU-T Q.816 wird in der 3GPP SA5 auch der Fall betrachtet, dass ein Agent mit mehreren Managern verbunden ist. Für diesen Fall kann sich das Problem ergeben, dass die Manager unterschiedliche Wünsche bezüglich der Heartbeat-Periode haben können. Allerdings unterstützt der oben beschriebene Heartbeat-Service nur eine einzige Heartbeat-Periode. Bei dem in Rede stehenden Fall eines Heartbeat-Service bei Verbindung eines Agenten mit mehreren Managern kann es daher zu einem sogenannten Ping-Pong Effekt kommen. Dieser tritt auf wenn ein erster Manager die Heartbeat-Periode auf eine erste Zeit einstellt und ein zweiter Manager eine andere Heartbeat-Periode anfordert. Beispielsweise stellt ein Manager A die Heartbeat-Periode auf eine Zeit von 1 Minute ein. Ein zweiter Manager B wird hierdurch jedoch überlastet und stellt die Periode auf eine Zeit von 10 Minuten, wodurch aber auch der Manager A nur noch alle 10 Minuten eine Heartbeat-Notifikation erhält. Manager A kann sich dann durch die Situation wieder veranlasst fühlen, die Periode für den Heartbeat-Service erneut auf 1 Minute zurückzustellen. Wie an diesem Beispiel zu sehen, ergibt sich durch eine konkurrierende Wahl der Heartbeat-Periode der angesprochene Ping-Pong-Effekt.

Um den erläuterten Ping-Pong-Effekt zu unterdrücken, wurde in der Standardisierung 3GPP SA5 vorgeschlagen, die Operation zum Einstellen der Heartbeat-Periode optional zu gestalten. Im Ein-Manager-Fall würde diese Operation dann bevorzugt bereitgestellt werden. Im Multi-Manager-Fall wird sie bevorzugt nicht bereitgestellt, so dass die Heartbeat-Periode vom Agent verbindlich für alle mit ihm verbundenen Manager vorgegeben werden müsste.

Auf die vorgeschlagene Art und Weise kann zwar dem Ping-Pong-Effekt begegnet werden, jedoch erfolgt dies unter Beschränkung der Flexibilität des Heartbeat-Service.

Der Erfindung liegt die Aufgabe zugrunde, ein Verfahren, einen Agenten und ein Managementsystem der eingangs genannten Art aufzuzeigen, durch welche die Überwachung der Verbindungen im Managementsystem mit Unterstützung eines flexiblen Heartbeat-Service für mehrer Manager auf einfache Art und Weise bewirkt und gleichzeitig der beschriebene Ping-Pong-Effekt in Verbindung mit dem Heartbeat-Service vermieden werden kann. Insbesondere sollte eine möglichst geringe Einschränkung der Variabilität der Manager im Hinblick auf die Periode für die Notifikationen des Heartbeat-Service erreicht werden. Gegebenfalls kann zusätzlich als erweiterte Aufgabe auch der Bedarf an erforderlicher Rechenleistung für die Verarbeitung der Notifikationen des Heartbeat-Service berücksichtigt werden.

Diese Aufgabe wird gemäß der Erfindung hinsichtlich des Verfahrens durch die Merkmale des Patentanspruchs 1, hinsichtlich des Agenten durch die Merkmale des Patentanspruchs 17 und hinsichtlich des Managementsystems durch die Merkmale des Patentanspruchs 25 gelöst. Weiterbildungen und Ausgestaltungen der Erfindung sind insbesondere den abhängigen Ansprüchen zu entnehmen.

Erfindungsgemäß wird den zumindest zwei Managern eine unterschiedliche Periode für die Notifikationen des Heartbeat-Service vom zumindest einen Agenten zugeordnet.

Durch diese Maßnahme wird eine verbesserte Überwachung von Verbindungen im Mangementsystem des Kommunikationsnetzes im Hinblick auf die Richtung von Agenten zum Manager unter Vermeidung des Ping-Pong-Effekts ermöglicht, indem ein allgemeingültiger, hersteller-unabhängiger Mechanismus zur Verfügung gestellt wird, der nicht nur für GSM (Global System for Mobile communication) und UMTS (Universal Mobile Telecommunication System) Mobilfunk-Netze, sondern auch grundsätzlich für das Management von beliebigen Telekommunikationsnetzen eingesetzt werden kann. Die Erfindung erlaubt eine Überwachung von Verbindungen in Managementsystemen, welche Funktionen verschiedener Management-Ebenen realisieren, beispielsweise das Network Element Management oder das Network Management. In der Regel liegen dabei eine Vielzahl von Netzwerk Element Managern (z.B. OMCs) und eine Vielzahl von Netzwerk Managern (z.B. NMCs) vor.

Das erfindungsgemäße Verfahren ist dabei grundsätzlich für alle Telekommunikationsnetze einsetzbar. Dies umfasst ausdrücklich gerade auch nicht kabelgebundene Telekommunikationsnetze. Denn insbesondere Mobilfunknetze erfordern ein wirksames Managementsystem. Ferner ist die Erfindung grundsätzlich unabhängig vom verwendeten Kommunikationsprotokoll anwendbar.

Die Erfindung fußt auf der Idee, jedem mit einem Agenten verbundenen Manager eine eigene individuelle Heartbeat-Periode zuzuordnen. Die Realisierung der individuellen Zuordnung zu jedem der zumindest zwei Manager kann auf verschiedenartige Weise erfolgen.

Bevorzugt erfasst jeder der zumindest zwei Manager die periodischen Notfikationen des Heartbeat-Service unter Einsatz von Filtereinrichtungen. Diese Filtereinrichtungen werden in der Regel für jeden der zumindest zwei Manager spezifische Filtereinrichtungen sein, d.h. jeder der mit dem Agenten verbundenen Manager kann individuell filtern. Das Filtern erfolgt bevorzugterweise anhand von filterbaren Zusatzinformationen oder Parametern in den periodischen Notifikationen der Heartbeat-Service.

Um Rechenkapazität im zumindest einen Agent zu sparen, ist es grundsätzlich auch möglich, im Agent keine Filter einzurichten und somit alle Notifikationen an jeden verbundenen Manager weiterzuleiten. Die Entscheidung, welche Notifikationen dann intern im Manager weitergeleitet werden (z.B. an den Operator), kann durch ein Filter im Manager erfolgen, wobei analog dem Fall der Filtereinrichtung im Agent auf die Zusatzinformation in der Notifikation gefiltert werden kann.

Die Benutzung von Filtereinrichtungen zum Erfassen der periodischen Notfikationen des Heartbeat-Service ist im Rahmen dieser Erfindung weit auszulegen. Darunter ist auch zu verstehen, dass eine Mehrzahl oder Vielzahl von Ereigniskanälen (Event Channel) zwischen Manager und Agent eingerichtet werden und dass eine Auswahl im Hinblick auf irgendeine "filterbare" (d.h. als Auswahlkriterium geeignete) Parameterinformation durch Benutzung eines dezidierten Ereigniskanals (Event Channel) erfolgt.

In Ausgestaltung der Erfindung kann als Objektinstanz mindestens ein Heartbeat-Objekt vorgesehen sein, welches mit der Periode für die Notifikationen des Heartbeat-Service diese Notifikationen sendet. Diese Variante umfasst eine Erweiterung des Heartbeat-Mechanismus gemäß ITU T Q.816 auf den Fall, dass ein Agent mit mehreren Managern verbunden ist (Multi-Manager-Fall). Grundsätzlich ist es möglich, ein einziges, aber gegenüber ITU-T Q.816 erweitertes Heartbeat-Objekt für die mindestens zwei mit dem zumindest einen Agenten verbundenen Manager zu benutzen. Alternativ kann aber auch jedem der zumindest zwei Manager ein Heartbeat-Objekt zugeordnet sein.

Die Notifikationen des Heartbeat-Service können zur Durchführung des erfindungsgemäßen Verfahrens Parameterinformation über die Identität wenigstens eines der zumindest zwei Manager umfassen. Das bedeutet, dass in die ausgesendeten Heartbeat-Notifikationen die Referenz des assozierten Managers als filterbarer Parameter eingebunden ist. Durch eine entsprechende Einstellung oder Wahl der Filterkriterien kann sichergestellt werden, dass der aufrufende Manager die Heartbeat-Notifikation mit der gewünschten Periode erhält.

Die oben beschriebenen Verfahren sind unter dem Gesichtspunkt der zur Filterung erforderlichen Rechenleistung nicht optimiert. Im Folgenden werden Varianten vorgeschlagen, die eine Verringerung des mit der Filterung einhergehenden Rechenaufwands gewährleisten können.

Der Rechenaufwand für die Filterung der Heartbeat-Notifikationen kann grundsätzlich dadurch reduziert werden, dass mindestens eine Notifikation des Heartbeat-Service für mehrere Manager bestimmt ist. Das bedeutet, dass zwei oder mehrere Manager, die mit dem Agenten verbunden sind, dieselbe Heartbeat-Notifikation erhalten. Die Erkennbarkeit der an sie gerichteten Heartbeat-Notifikationen für die assoziierten Manager können dadurch sichergestellt werden, dass diese Notifikationen des Heartbeat-Service Parameterinformationen über die Identität der assoziierten Manager umfassen. Die Heartbeat-Notifikationen enthalten als filterbare Parameter eingebunden Referenzen der assoziierten Manager.

In Weiterbildung der Erfindung wird vorgeschlagen, dass der zumindest eine Agent bei Übereinstimmung eines mehreren Managern gewünschten Empfangszeitpunktes der Notifikationen des Heartbeat-Service eine einzige Notifikation für diese mehreren Manager erzeugt. Das bedeutet, dass der Agent prüft, ob von mehreren Managern ein übereinstimmender Empfangszeitpunkt einer Heartbeat-Notifikation gewünscht wird. Ist dies der Fall, wird eine einzige Notifikation für diese assoziierten mehreren Manager erzeugt.

Dies kann dadurch erfolgen, dass der zumindest eine Agent für jeden der mehreren Manager die Periode für die Notifikationen des Heartbeat-Service festlegt. In Ausgestaltung dieses Vorschlages ist es aber auch möglich, dass die assoziierten mehreren Manager den zumindest einen Agenten über ihre bevorzugte Periode für die Notifikationen des Heartbeat-Service informieren. Unter Berücksichtigung dieser Informationen kann dann der zumindest eine Agent für jeden der mehreren Manager die Periode für die Notifikationen des Heartbeat-Service geeignet festlegen.

Das erfindungsgemäße Verfahren erlaubt es dabei prinzipiell, einerseits beliebige Perioden für die Notifikation des Heartbeat-Service auszuwählen bzw. festzulegen und andererseits einen beliebigen Versatz (relative Zeitlage) zwischen den Perioden zu definieren. Gleichwohl kann eine geeignete Auswahl der Perioden und/oder des Versatzes zwischen den Perioden zu einer weiteren Reduzierung des erforderlichen Rechenaufwandes führen. Mit Vorteil können daher geeignete Kriterien für die Wahl der Perioden und/oder des Versatzes zwischen den Perioden herangezogen werden. Beispielsweise kann der Agent die Perioden bzw. Aussendezeitpunkte der Notifikationen jedoch entsprechend nach einem oder mehreren der folgenden Kriterien wählen:
- Die Perioden für die Notifikationen des Heartbeat-Service können als ganzzahliges Vielfaches eines Grundintervalls gewählt werden. Das bedeutet, dass die Länge der verwendete Perioden gleich dem ganzzahligen Vielfachen eines beliebigen Grundtaktes sein sollte.
- Der Versatz der Perioden sollte so gelegt werden, dass sich die Aussendezeitpunkte möglichst oft überlappen.
- Die verwendeten langen Perioden sollten möglichst gleich dem ganzzahligen Vielfachen der kürzesten Periode sein.

Die Periode für die Notifikationen des Heartbeat-Service kann aus einem periodischen Zeitschema in Form eines periodisch sich wiederholenden Musters von Aussendezeitpunkten für die Notifikationen des Heartbeat-Service bestehen. Dies ist gleichbedeutend damit, dass zumindest einem der mehreren Manager eine überlagerte Anzahl von unterschiedlichen Perioden für Notifikationen des Heartbeat-Service zugeordnet wird.

Eine weitere Möglichkeit, den erforderlichen Rechenaufwand bei einem Verfahren mit Bestimmung mindestens einer Heartbeat-Notifikation für mehrere Manager zu verringern, besteht darin, dass die Notifikationen des Heartbeat-Service Parameterinformationen über den Aussendezeitpunkt der Notifikationen des Heartbeat-Service umfassen. Dies ermöglicht jedem der mit dem Agenten verbundenen Manager die Filtereinrichtungen in seiner Subskription entsprechend so zu wählen, dass die von dem jeweiligen Manager gewollten Heartbeat-Notifikationen zu ihm übermittelt werden. Die Parameterinformationen über den Aussendezeitpunkt kann in jeder geeigneten Weise vorliegen.

In Ausgestaltung können die Notifikationen des Heartbeat-Service periodisch in einem festen Zeitintervall gesendet werden. Damit ist es möglich, die vom Manager gesehene Periodizität der Heartbeat-Notifikationen auf ein ganzes Vielfaches des Zeitintervalls auszudehnen. Manager, die mit der Grundperiode zufrieden sind, müssen keinen Filter im Agent einrichten.

Der zumindest eine Manager kann für jeden der mehreren Manager ein festes Zeitintervall für die Notifikationen des Heartbeat-Service festlegen.

Zusätzlich kann vorgesehen sein, dass die mehreren Manager den zumindest einen Agenten über ein bevorzugtes festes Zeitintervall für die Notifikationen des Heartbeat-Service informieren. Unter Berücksichtigung dieser Informationen kann dann der zumindest eine Agent ein Zeitintervall für die Notifikationen des Heartbeat-Service geeignet festlegen.

Der erforderliche Filteraufwand kann erheblich reduziert werden, indem die letztendliche Entscheidung über die jedem Manager zugeordnete Periode nicht bei der internen Generierung der Heartbeat-Notifikationen im Agenten getroffen wird, sondern durch ein Umsetzung der folgenden einzelnen Maßnahmen oder aller folgender Maßnahmen:
- Einfügen einer Zusatzinformation bzgl. des Aussendezeitpunktes in die Notifikation,
- Filterung auf die Zusatzinformation (Parameterinformation), um zu entscheiden, ob die Notifikation an den Manager, dem dieses Filter in seiner Subskription zugeordnet ist, weitergeleitet oder verworfen werden soll,
- Rasterung der möglichen Aussendezeitpunkte,
- Einschränkung der zugelassenen Perioden auf ein ganzzahliges Vielfaches eines Grundtaktes,
- Abgleich des Versatzes zwischen den verschiedenen Perioden.

Zur Lösung der der Erfindung zugrunde liegenden Aufgabe wird ein Agent eines Managementsystems eines Kommunikationsnetzes zur Überwachung von Verbindungen in dem Managementsystem des Kommunikationsnetzes als eine von zumindest zwei Managementeinrichtungen des Managementsystems in verschiedenen Managementebenen vorgeschlagen, wobei der Agent Mittel zum Senden von periodischen Notifikationen eines Heartbeat-Service an zumindest zwei mit ihm verbundene Manager aufweist. Erfindungsgemäß sind Mittel vorhanden, um den zumindest zwei Managern eine unterschiedliche Periode für die Notifikation des Heartbeat-Services vom Agenten zuzuordnen.

Des Weiteren können im Agenten vorgesehen sein:
- Mittel zum Senden der Notifikationen mit Parameterinformationen über die Identität wenigstens eines der mindestens zwei Manager,
- Mittel zum Senden mindestens einer Notifikation des Heartbeat-Service an mehrere Manager,
- Mittel zum Erzeugen einer einzigen Notifikation für mehrere Manager bei Übereinstimmung eines von diesen mehreren Managern gewünschten Empfangszeitpunktes der Notifikation des Heartbeat-Service,
- Mittel zur Festlegeung der Periode für die Notifikationen des Heartbeat-Service für jeden der mehreren Manager,
- Mittel zum Senden der Notifikationen mit Parameterinformationen über den Aussendezeitpunkt der Notifikationen des Heartbeat-Service und/oder
- Mittel zum periodischen Senden der Notifikationen in einem festen Zeitintervall.

Im Agenten können weitere geeignete Mittel vorgesehen sein. Dies trifft insbesondere auf Mittel zur Durchführung eines der erfindungsgemäßen Verfahren zu.

Ferner kann der Agent in seiner Tätigkeit im Hinblick auf Subskription des jeweiligen Managers einstellbare und/oder variierbare Filtereinrichtungen aufweisen.

Das erfindungsgemäße Managementsystem eines Kommunikationsnetzes zur Überwachung von Verbindungen im Managementsystem mit zumindest zwei Managementeinrichtungen in verschiedenen Managementebenen umfasst mehrere Manager und zumindest einen Agenten als Einrichtungen in verschiedenen Managementebenen, wobei der zumindest eine Agent Mittel zum Senden von periodischen Notifikationen eines Heartbeat-Service an zumindest zwei mit ihm verbundene Manager aufweist. Das Mangementsystem weist mit Vorteil Mittel zur Durchführung der oben beschriebenen Verfahren auf. Insbesondere kann es zumindest einen wie oben erläuterten Agenten enthalten.

Die mit der Erfindung erzielten Vorteile lassen sich wie folgt zusammenfassen:
- Dem Auftreten des Ping-Pong-Effektes kann dadurch entgegengetreten werden, dass die mit dem zumindest einen Agenten verbundenen Manager jeweils eine individuelle Periode einrichten können, mit dem Heartbeat-Notifikationen an den jeweiligen Manager gesendet werden.
- Der für die Filterung erforderliche Rechenaufwand kann dadurch verringert werden, dass zumindest teilweise Notifikationen des Heartbeat-Service für mehrere Manager bestimmt sind. Denn, wenn zu einem Zeitpunkt mehrere Manager eine Notifikation erhalten sollen, ist es ausreichend, eine Heartbeat-Notifikation intern im Agenten zu generieren. Das reduziert den Filteraufwand, da die Zahl der Notifikationen verringert wird. Der erforderliche Filteraufwand kann zusätzlich dadurch reduziert werden, dass eine Einschränkung der zugelassenen Perioden auf ganzzahlige Vielfache eines Grundtaktes und/oder ein Abgleich des Versatzes zwischen den verschiedenen Perioden vorgesehen ist.
- Dadurch, dass die Notifikationen des Heartbeat-Service mit Parameterinformationen über den Aussendezeitpunkt der Heartbeat-Notifikationen versehen werden und dadurch dass gegebenenfalls zusätzlich die Heratbeat-Notifikationen periodisch in einem festen Zeitintervall gesendet werden, bietet sich eine alternative Möglichkeit, den für die Filterung erforderliche Rechenaufwand zu vermindern. Denn nur Manager, die mit dem vom Agenten vorgegebenen Zeitintervall bzw. einem ersatzweise vorgesehnen Zeitschema nicht zufrieden sind, müssen entsprechend einen Filter einrichten.

Die mögliche Einsparung an Filteraufwand wird im Folgenden anhand eines Beispiels erläutert, wobei für diesen Fall zwei mit dem Agenten verbundene Manager (Manager A und Manager B) betrachtet werden. Manager A möchte Heartbeat-Notifikationen mit einer Periode bzw. einem Zeitintervall von 2 Minuten, Manager B von 10 Minuten erhalten.

Für den Fall, dass jedem Manager eine individuelle Heartbeat-Notifikation gesendet wird, ergibt sich damit eine Filterung für Manager A von 6 (5+1) mal pro 10 Minuten. Zusätzlich muss der Filter für Manager B 6 (5+1) mal pro 10 Minuten gerechnet werden. Damit ergibt sich insgesamt ein Rechenaufwand von 12 Filtern pro 10 Minuten.

Stellt man dem eine Verfahrensvariante mit Heartbeat-Notifikationen an beide Manager A und B und dem Vorhandensein eines Grundtaktes in Höhe von 2 Minuten gegenüber, ergibt sich folgendes: Manager A braucht keinen Filter, um die Heartbeat-Notifikationen zu bearbeiten, da der Grundtakt von 2 Minuten mit seinem gewünschten Zeitintervall übereinstimmt. Der Filter für Manager B muss 5 mal pro 10 Minuten gerechnet werden. Damit ergibt sich in diesem Fall insgesamt ein Rechenaufwand von 5 Filtern pro 10 Minuten. Im gezeigten Beispielfall ist damit der Rechenaufwand mehr als halbiert worden.

Nachstehend wird die Erfindung anhand von Ausführungsbeispielen erläutert, wobei zunächst Managementsysteme zeigende Figuren näher beschrieben werden.

Es zeigen:
- Fig. 1: das vereinfachte Blockschaltbild eines Managementsystems für ein Mobil-Kommunikationsnetz mit Agent-Manager-Beziehung zwischen Betriebs- und Wartungszentren und mehreren Netzwerkmanagementzentren,
- Fig. 2: ein erweitertes Blockschaltbild des Managementsystems für ein Kommunikationsnetz mit Agent-Manager-Beziehung zwischen Netzelementen, Betriebs- und Wartungszentren und mehreren Netzwerkmanagementzentren.

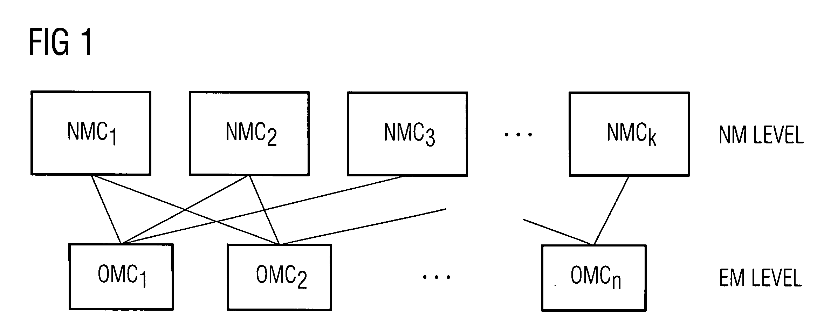

In Figur 1 ist das Blockschaltbild eines Managementsystems für ein Mobil-Kommunikationsnetz mit Agent-Manager-Beziehung zwischen Betriebs- und Wartungszentren OMC₁, OMC₂, OMC₃ bis OMCₙ (Operation and Maintenance Center)und mehreren Netzwerkmanagementzentren NMC₁, NMC₂, NMC₃ bis NMCₖ (Network Management Center) dargestellt. Dabei ist Figur 1 im vorliegenden Fall auf eine Darstellung mit zwei Ebenen NM LEVEL und EM LEVEL beschränkt.

Die Managementebene EM LEVEL kennzeichnet die Netzelementmanagementebene ("Network Element Management Level"), in der Betriebs- und Wartungszentren OMC₁, OMC₂, OMC₃ bis OMCₙ jeweils die herstellerspezifische Managementfunktionalität für beispielsweise nicht in Figur 1 gezeigte einzelne Basisstationen des Basisstationssystems bereitstellen. Die Managementebene NM LEVEL kennzeichnet die Netzwerkmanagementebene ("Network Management Level"), in der Netzwerkmanagementzentren NMC₁, NMC₂, NMC₃ bis NMCₖ jeweils eine integrierte, in der Regel vom Hersteller unabhängige Management-Funktionalität realisieren. Dabei können mehrere Netzwerkmanagementzentren NMC einen Zugriff zu derselben Netzeinrichtung der nächstniedrigeren Managementebene EM LEVEL haben, im vorliegenden Beispiel beispielsweise die Netzmanagementzentren NMC₁ und NMC₂ der nächsthöheren Managementebene NM LEVEL zum Betriebs- und Wartungszentrum OMC₂ der nächstniedrigeren Managementebene EM LEVEL.

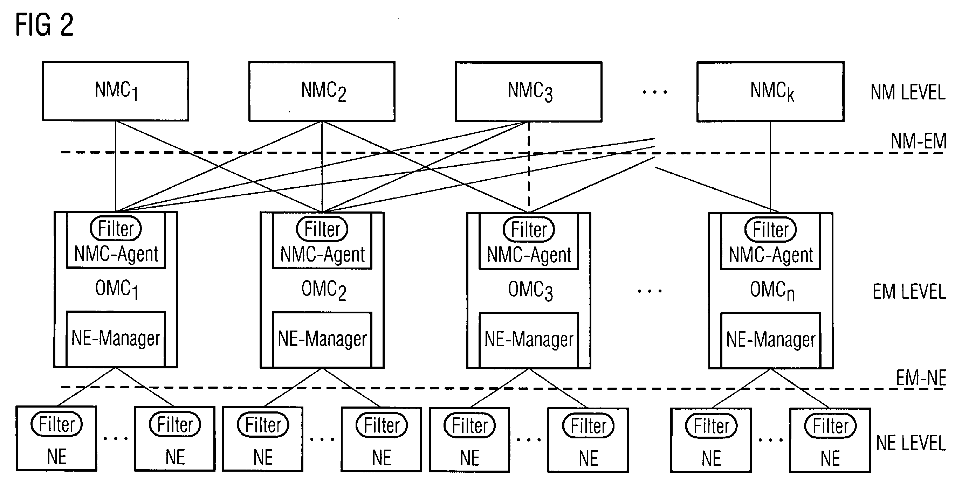

In Figur 2 ist ein erweitertes Blockschaltbild eines Managementsystems für ein Mobil-Kommunikationsnetz mit Agent-Manager-Beziehung zwischen einerseits Betriebs- und Wartungszentren OMC₁, OMC₂, OMC₃ bis OMCₙ (OMC Operation and Maintenance Center) und Netzelementen NE (Network Elements), sowie andererseits Netzwerkmanagementzentren NMC₁, NMC₂, NMC₃ bis NMCₖ (Network Management Center) und den Betriebs- und Wartungszentren OMC₁, OMC₂, OMC₃ bis OMCₙ (Operation and Maintenance Center) dargestellt. Figur 2 zeigt eine Darstellung mit drei Managementebenen NM LEVEL, EM LEVEL und NE LEVEL. In Figur 2 ist im Gegensatz zu Figur 1 eine dritte Managementebene des Managementnetzes dargestellt, welche die Netzeinrichtungsebene ("Network Element Level") mit mehreren Basisstationssystemen enthält.

Die Managementebene EM LEVEL kennzeichnet die Netzelementmanagementebene ("Network Element Management Level"), in der Betriebs- und Wartungszentren OMC₁, OMC₂, OMC₃ bis OMCₙ jeweils die herstellerspezifische Managementfunktionalität für beispielsweise in der Managementebene NE LEVEL in Figur 2 funktionell verallgemeinert als Netzelementen NE (Network Elements) dargestellten Basisstationssysteme (z.B. BSS₁ bis BSSp mit Base Station Systemen in einer Anzahl von 1 bis P) bereitstellen.

Zwischen den Elementen unterschiedlicher Managementebenen sind definierte Schnittstellen zur Informationsübertragung vorgesehen. Die Schnittstelle NM-EM zwischen den Netzwerkmanagementzentren NMC₁, NMC₂, NMC₃ bis NMCₖ und den regionalen Betriebs- und Wartungszentrum OMC₁, OMC₂, OMC₃ bis OMCₙ ist hersteller-unabhängig ausgebildet. Mit den Netzwerkmanagementzentren NMC₁, NMC₂, NMC₃ bis NMCₖ sind über beispielsweise eine Echtzeit-Schnittstelle NM-EM die Betriebs- und Wartungszentren OMC₁, OMC₂, OMC₃ bis OMC_{N} verbunden. Logisch sind in der Regel wie dargestellt das Netzwerkmanagementzentren NMC₁, NMC₂, NMC₃ bis NMCₖ mit den NMC-Agenten der Betriebs- und Wartungszentren OMC₁, OMC₂, OMC₃ bis OMCₙ verbunden. Jedes der Betriebs- und Wartungszentren OMC₁, OMC₂ bis OMC_{N} weist außerdem logisch für die Schnittstelle EM-NE zu den Netzelementen NE einen Manager NE-Manager auf. In den Netzelementen NE können - wie in Figur 2 gezeigt - Filtereinrichtungen *Filter* für die Übertragung der Ereignismeldungen zu den Betriebs- und Wartungszentren OMC₁, OMC₂, OMC₃ bis OMCₙ vorgesehen sein.

Nachfolgend werden einige Beispielvarianten des erfindungsgemäßen Verfahrens angeführt.

### Variante A:

Diese Variante betrifft eine Erweiterung des Heartbeat-Mechanismus gemäß ITU-T Q.816 auf den Multi-Manager-Fall.

In einer Untervariante A1 gemäß dem Verfahren nach Variante A wird jedem Manager ein Heartbeat-Objekt zugeordnet, das die Operationen *periodSet* und *periodGet* unterstützt und entsprechend der eingestellten Periode Heartbeat-Notifikationen sendet. Jeder Manager richtet seine *periodSet* und *periodGet* Anforderungen (Requests) direkt an das ihm zugeordnete Objekt. In die ausgesendeten Heartbeat-Notifikationen muss die Referenz des assoziierten Managers als filterbarer Parameter eingebunden werden. Jeder Manager muss jetzt den Filter in seiner Subskription so einstellen, dass alle Heartbeat-Notifikationen mit seiner Manager Referenz an ihn weitergeleitet und die Notifikationen mit einer anderen Manager-Referenz verworfen werden.

Die konkrete Umsetzung der Untervariante A (je ein heartbeat-Objekt einem Manager zugeordnet) könnte folgendermaßen geregelt sein:
Zunächst erfolgt die Anmeldung beim dem Manager zugeordneten heartbeat-Objekt durch die Operation *periodSet* auf den gewünschten Wert.
Die Parameter der Notifikation "notifyHeartbeat notification" sind in der nachfolgenden Tabelle aufgelistet: 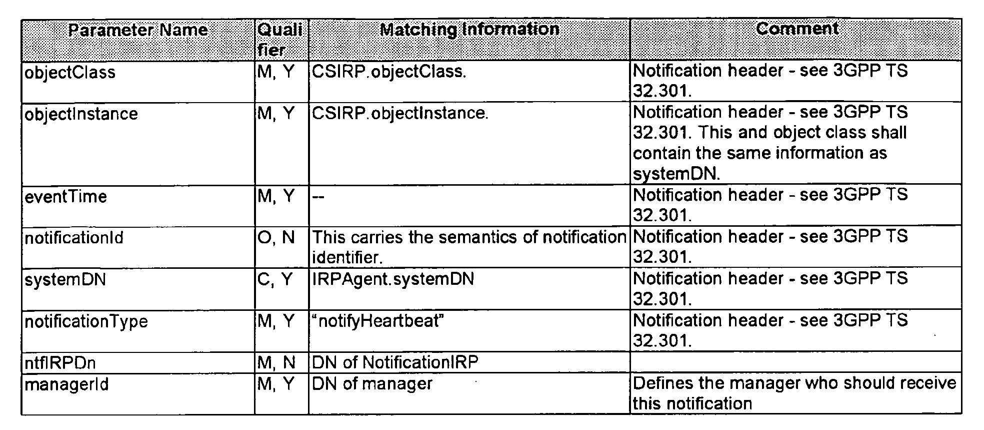
   Dabei stehen für bzw. bedeuten die verwendeten Abkürzungen:
   - M: -> Mandatory
   - O: -> Optional
   - C: -> Conditional

   In der Tabelle stammen die ersten 7 Zeilen unverändert aus dem derzeit vorliegenden Standardentwurf in 3GPP SA5 [TS 32.352 V1.0.0]. Der Manageridentifikationsparameter "managerId" ist neu eingefügt worden.
   Gespeicherte Daten im dem Manager zugeordneten ITU-T Q.816 heartbeat-Objekt sind:

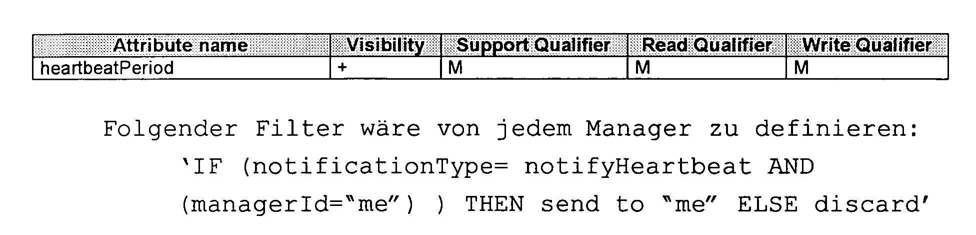

Nach einer zweiten Untervariante A2 gemäß dem Verfahren nach Variante A ist es auch möglich, nur ein einziges, aber gegenüber ITU-T Q.816 erweitertes Heartbeat-Objekt zu benutzen. Damit dieses Objekt die *periodSet* und *periodGet* Anforderungen (Requests) von verschiedenen Managern unterscheiden kann, muss die Anforderung (Request) einen Parameter enthalten, der den aufrufenden Manager eindeutig identifiziert.

Die konkrete Umsetzung der Untervariante A (ein heartbeat-Objekt für mehrere Manager) könnte folgendermaßen geregelt sein:

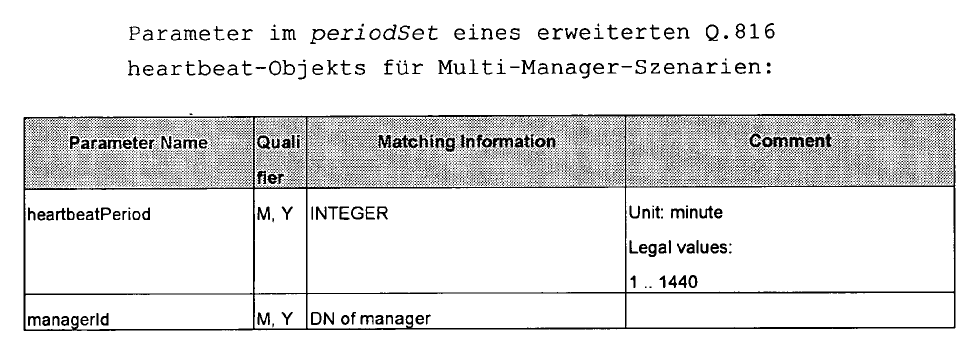

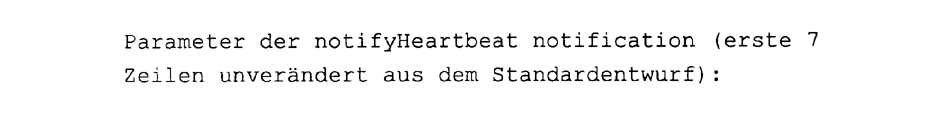

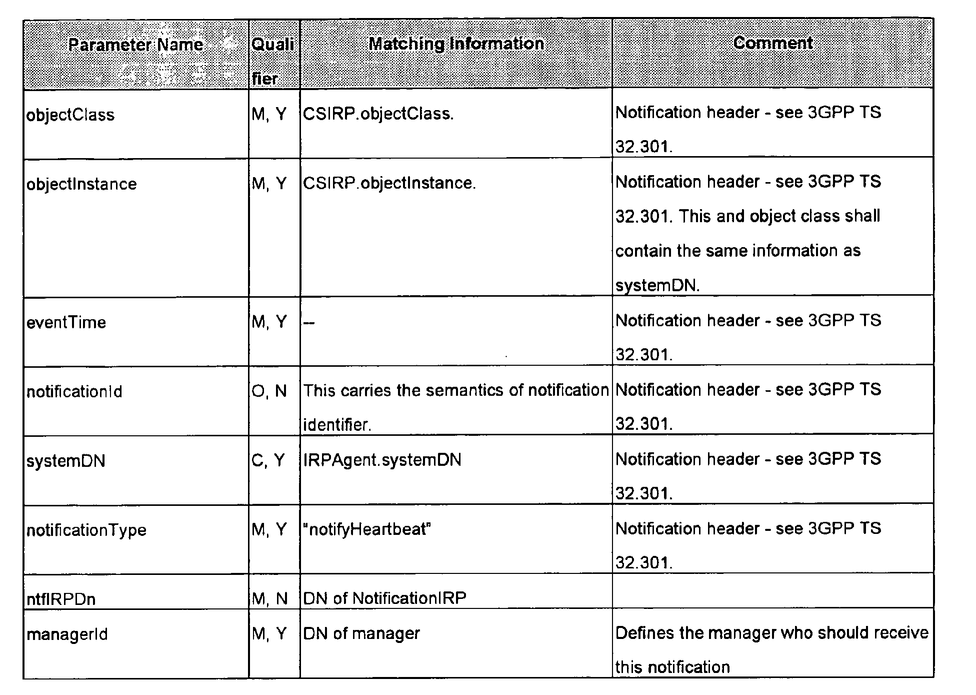

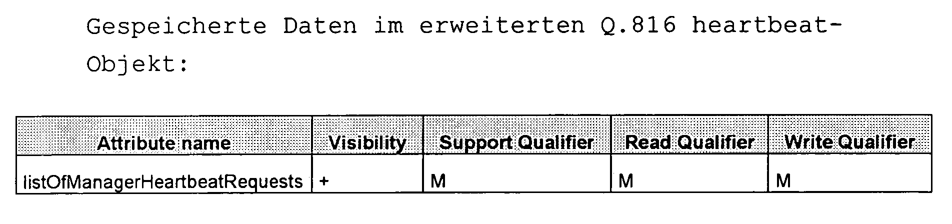

Each entry of listOfManagerHeartbeatRequests contains:
- managerId
- requestedHeartbeatPeriod

Folgender Filter wäre von jedem Manager zu definieren:
,IF (notificationType= notifyHeartbeat AND (managerId="me") ) THEN send to "me" ELSE discard

### Variante B:

Diese Variante betrifft eine erste Möglichkeit einer Verfahrensführung mit gegenüber der Variante A verringertem erforderlichem Rechenaufwand bezüglich der Filtereinrichtungen der mit dem Agenten verbundenen Mananger. Erfindungsgemäß wird zu Zeitpunkten, an denen zwei oder mehr Manager eine Notifikation erhalten sollen, intern im Agenten nur eine Notifikation erzeugt werden. Diese Notifikation trägt eine *Liste mit Referenzen* der Manager, die diese Notifikation erhalten sollen. Wie auch in Verfahren A muss hier jeder Manager ein Filter setzen, das nur Notifikationen weiterleitet, die seine Referenz enthalten. Allerdings muss hier nur eine Notifikation gefiltert werden und nicht zwei oder mehrere wie im Verfahren nach Variante A.

### Untervariante B1

Die jedem Manager zugeordneten Aussendezeitpunkte der Notifikationen besitzen eine einzige Periode.

### Subvariante B11:

In einer ersten Subvariante legt der Agent die Periode für jeden Manager fest.

Das Verfahren erlaubt es prinzipiell, beliebige Perioden und einen beliebigen Versatz zwischen den Perioden zu definieren. Um die Anzahl der ausgesendeten Notifikationen zu verringern und damit den Filteraufwand zu minimieren, kann der Agent die Perioden bzw. Aussendezeitpunkte der Notifikationen jedoch entsprechend folgender Kriterien wählen:
- Die verwendete Länge der Perioden sollte gleich dem ganzahligen Vielfachen eines beliebigen Grundtaktes sein.
- Der Versatz der Perioden sollte so gelegt werden, dass sich die Aussendezeitpunkte möglichst oft überlappen.
- Die verwendeten langen Perioden sollten möglichst gleich dem ganzzahligen Vielfachen der kürzesten Periode sein. Beispiel für Subvariante B11: Manager A soll Notifikationen mit einer Periode von zwei Minuten erhalten. Manager B soll Notifikationen mit einer Periode von 8 Minuten erhalten. Die Notifikationen werden alle zwei Minuten ausgesendet. Jede Notifikation trägt die Referenz des Managers A. Jede vierte Notifikation trägt zusätzlich die Referenz des Managers B.

### Subvariante B12:

In einer zweiten Subvariante informieren die Manager den Agent über ihre bevorzugte Periode.
i)Das Verfahren erlaubt es den Managern prinzipiell, beliebige Perioden auszuwählen. Um den Filteraufwand zu minimieren, könnten die für die Manager auswählbaren Perioden jedoch entsprechend folgender Kriterien eingeschränkt werden:
   - Die verwendete Länge der Perioden sollte gleich dem ganzzahligen Vielfachen eines beliebigen Grundtaktes sein.
   - Die verwendeten langen Perioden sollten möglichst gleich dem ganzzahligen Vielfachen der kürzesten Periode sein.

   Damit diese Kriterien eingehalten werden können, muss der Manager Kenntnis über den Grundtakt haben. Dieser kann dem Manager z.B. durch den Agent mit Hilfe eines lesbaren Attributes bekannt gemacht werden.
ii): Das Verfahren erlaubt es prinzipiell, mit der Aussendung von Notifikationen zu beginnen, sobald ein Manager dem Agent mitgeteilt hat, mit welcher Periode Notifikationen zu ihm gesandt werden sollen. Um den Filteraufwand weiter zu verringern, sollte der Agent den Versatz der Perioden so legen, dass sich die Aussendezeitpunkte möglichst oft überlappen.
iii): Es auch möglich, dass der Agent dem Wunsch eines Managers nur näherungsweise entspricht, um die Einhaltung der Kriterien zu erzwingen bzw. um den Filteraufwand weiter zu reduzieren. In diesem Fall muss der Agent dem Manager mitteilen, welche Periode er gewählt hat.

Beispiel für Subvariante B12: Der Grundtakt beträgt eine Minute. Manager A möchte Heartbeat-Notifikationen mit einer Periode von zwei Minuten. Manager B möchte Heartbeat-Notifikationen mit einer Periode von neun Minuten. Der Agent entscheidet jetzt, Notifikationen alle zwei Minuten auszusenden. Damit kann Manager B nur Notifikationen entweder alle acht Minuten oder alle zehn Minuten erhalten. Die vom Agent gewählte Periode wird Manager B mitgeteilt. Jede Notifikation trägt die Referenz des Managers A. Jede vierte bzw. fünfte Notifikation trägt zusätzlich die Referenz des Managers B.

Die konkrete Umsetzung der Subvariante B12 (Agent ermittelt die Manager-Adressaten intern) könnte folgendermaßen geregelt sein:

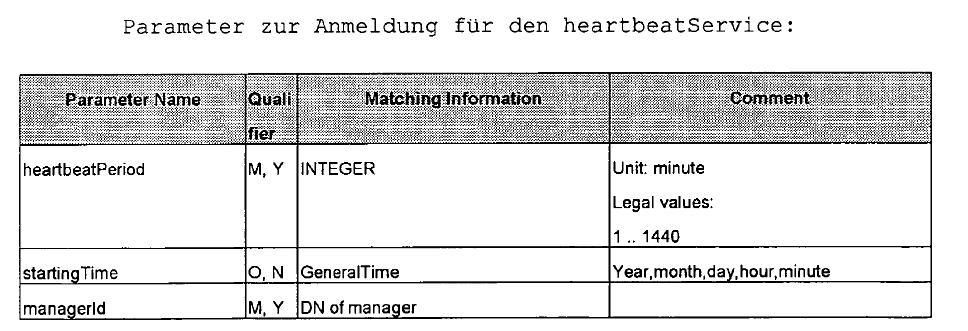

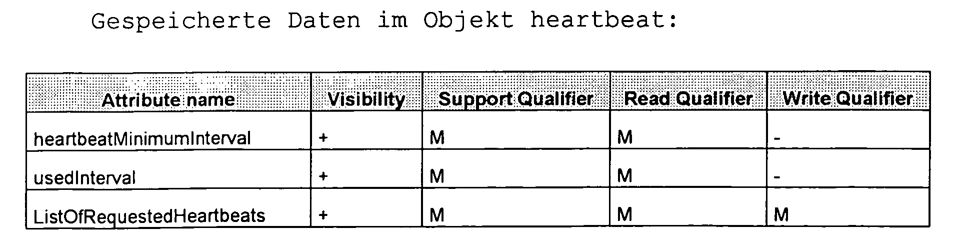

Single entries of ListOfRequestedHeartbeats contain:
- RequestingManager
- RequestedPeriod (ggf. mit startingTime) or - minuteOfTheHourPattern

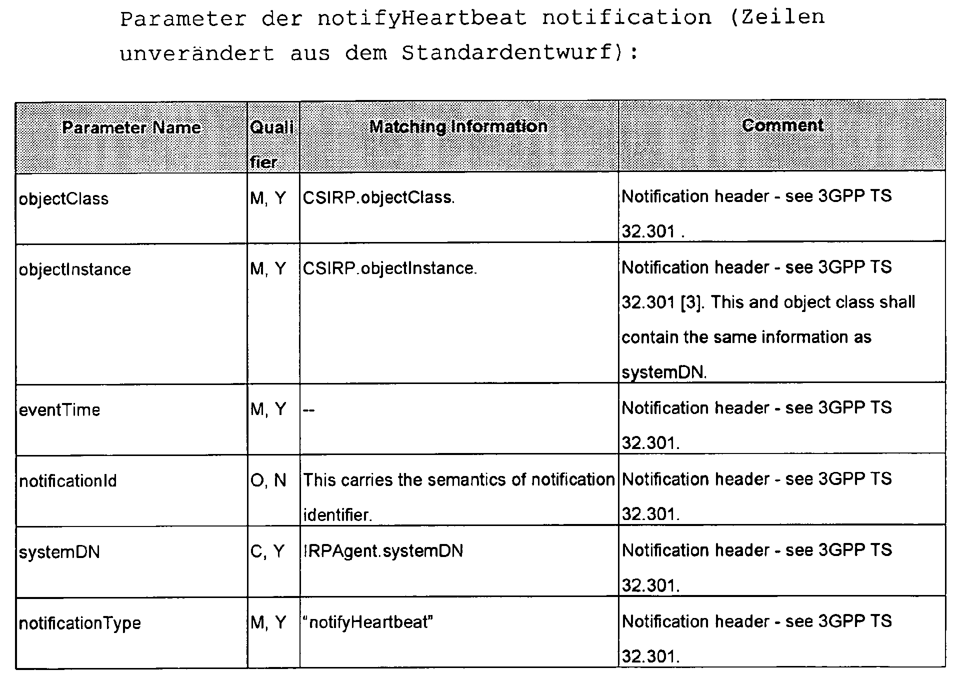

### Untervariante B2

Die jedem Manager zugeordneten Aussendezeitpunkte der Notifikationen sind grundsätzlich beliebige Zusammensetzungen eines Zeitschemas in Form eines sich periodisch wiederholenden Musters von Aussendezeitpunkten.

### Subvariante B21:

Wie in Subvariante B11 können die Aussendezeitpunkte vom Agent festgelegt werden. Um den Filteraufwand zu minimieren, können die Aussendezeitpunkte auf ein beliebiges Grundraster synchronisiert werden.

### Subvariante B21:

Wie in Subvariante B12 informieren die Manager den Agenten über die von ihnen gewünschten Aussendezeitpunkte. Um den Filteraufwand zu minimieren, können die Aussendezeitpunkte auf ein beliebiges Grundraster synchronisiert werden. Hierbei ist auch möglich, dass der Agent dem Wunsch eines Managers nur annähernd entspricht, um die Einhaltung des Kriteriums zu erzwingen. In diesem Fall muss der Agent dies dem Manager mitteilen.

### Variante C:

Diese Variante betrifft eine zweite Möglichkeit einer Verfahrensführung mit gegenüber der Variante A verringertem erforderlichem Rechenaufwand bezüglich der Filtereinrichtungen der mit dem Agenten verbundenen Mananger.

Erfindungsgemäß werden Heartbeat-Notifikationen mit filterbaren Zusatzinformationen versehen, die den *Aussendezeitpunkt* beschreiben. Durch Setzen eines Filters in seiner Subskription kann der Manager angeben, welche Notifikationen er haben will und welche nicht.

Untervariante C1

Notifikationen werden periodisch entsprechend einem festen Zeitintervall ausgesendet. Damit ist es möglich, die vom Manager gesehene Periodizität der Heartbeat-Notifikationen auf ein ganzes Vielfaches des Grundzeitintervalles auszudehnen. Manager, die mit der Grundperiode zufrieden sind, müssen keinen Filter im Agent einrichten.

Damit der Manager sein Filter entsprechend seinen Anforderungen setzen kann, muss der Manager über eine Operation verfügen, die ihm Informationen über das vom Agent verwendete Zeitintervall und über die Syntax/Semantik der vom Agent in die Notifikationen eingefügten Zusatzinformationen liefert.

### Subvariante C11:

In einer ersten Subvariante legt der Agent das Zeitintervall fest.

Beispiel für Subvariante C11: Der Agent sendet eine Heartbeat-Notifikation jede Minute aus. Als Zusatzinformation trägt er in die Notifikation einen Zähler n = 1...60 ein und einen Parameter fitsToPeriod = {1} v {1,2} v {1, 3} v {1, 4} v {1, 5} v {1, 2, 3, 6} v {1, 2, 5, 10} v {1, 3, 5, 15} v {1, 2, 5, 10, 20} v {1, 2, 3, 5, 10, 15, 30} v {1, 2, 3, 5, 10, 15, 20, 30, 60}. Manager, die jede Minute eine Notifikation haben wollen, brauchen nicht zu filtern. Ein Manager, der beispielsweise alle 20 Minuten eine Notifikation haben will, muss in seinem Filter überprüfen, ob fitsToPeriod ein Element mit dem Wert 20 hat. Nur in diesem Fall darf die Notifikation weitergeleitet werden. Durch Filtern auf beliebige Werte von n können beliebige Notifikationen weitergeleitet bzw. verworfen werden.

Die konkrete Umsetzung der Subvariante C12 (der Agent definiert ein festes Zeitintervall) könnte folgendermaßen geregelt sein:
Es ist keine Anmeldung durch den Manager nötig. Einrichten der Filter ist ausreichend. 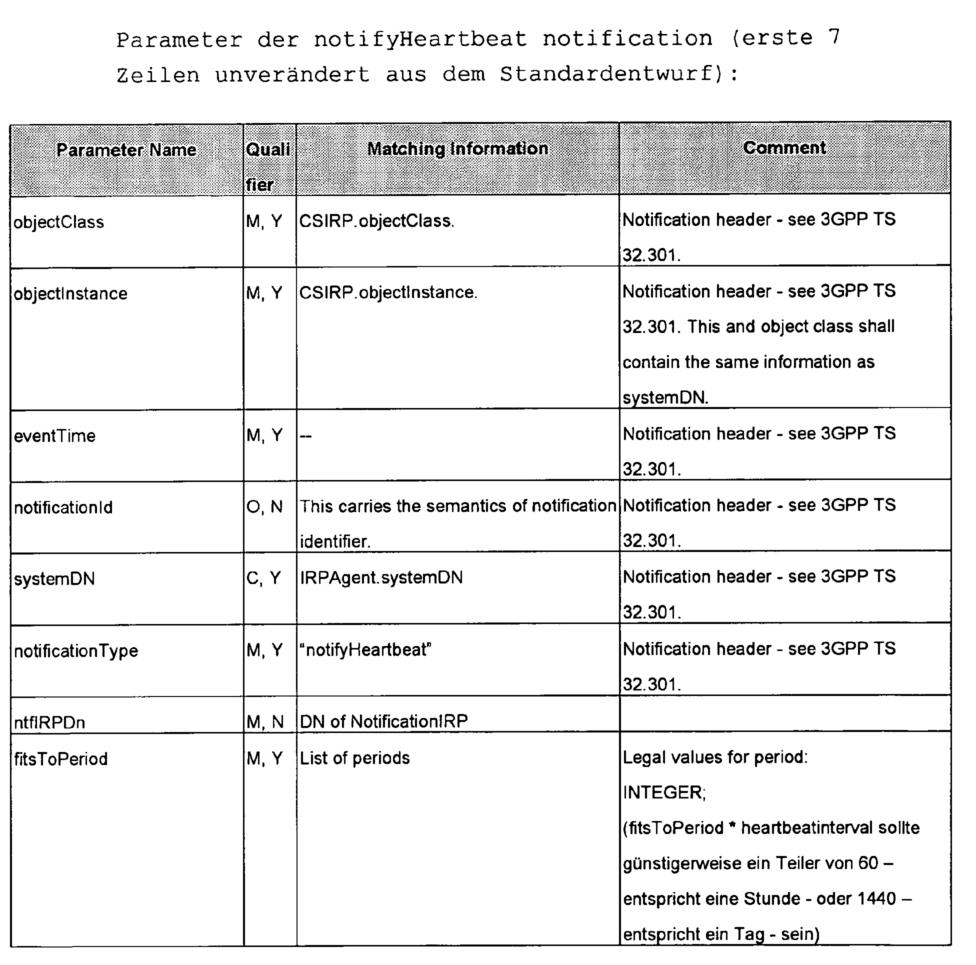 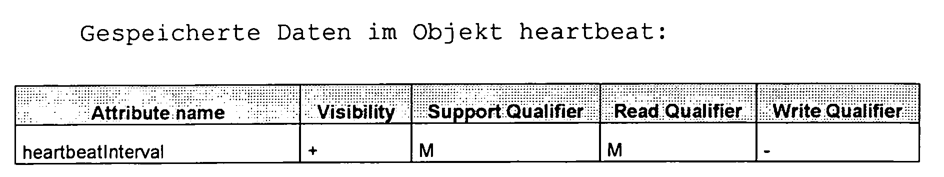
Beispiel: Das Zeitintervall heartbeatInterval ist auf 1 Minute festgelegt.
Manager, die den Heartbeat-Service in Anspruch nehmen wollen, müssen diesen Wert auslesen; der Agent darf den Wert nicht ändern.
Alle Manager, die mit dem dem Heartbeat-Intervall von einer Minute zufrieden sind, müssen kein Filter setzen.
In diesem Fall würde ein Filter von einem Manager A, der einen 5 Minuten-Takt wünscht, wie folgt definiert:
   ,IF (notificationType= notifyHeartbeat AND (fitsToPeriod contains 5) ) THEN send to me ELSE discard'
Ein Manager B, der einen 2 Minuten-Takt wünscht, definiert:
   ,IF (notificationType= notifyHeartbeat AND (fitsToPeriod contains 2) ) THEN send to me ELSE discard'

### Subvariante C12:

In einer zweiten Subvariante informieren die Manager den Agent über ihr bevorzugtes Zeitintervall. Mit Hilfe dieser Informationen bestimmt der Agent dann ein Zeitintervall, das den erforderlichen Gesamtfilteraufwand minimiert. Das berechnete Zeitintervall muss an die Manager zurückgemeldet werden, damit diese ihre Filter entsprechend einstellen können.
i): Um den Filteraufwand zu minimieren, gilt das zu Subvariante B12 i) Geschriebene sinngemäß.
ii): Um den Filteraufwand zu minimieren, gilt das zu Subvariante B12 ii) Geschriebene sinngemäß.
iii): Um den Filteraufwand zu minimieren, gilt das zu Subvariante B12 iii) Geschriebene sinngemäß.

Beispiel für Subvariante C12: Manager A möchte Heartbeat-Notifikationen mit einer Periode in zwei Minuten. Manager B möchte Heartbeat-Notifikationen mit einer Periode in neun Minuten. Der Agent entscheidet jetzt, Notifikationen alle zwei Minuten auszusenden und teilt dies Manager A und B mit. Manager A muss kein Filter setzen. Manager B kann nicht alle neun Minuten eine Notifikation erhalten, sondern nur alle acht Minuten oder alle zehn Minuten. In Abhängigkeit von der in den Notifikationen enthaltenen Zusatzinformationen über den Aussendezeitpunkt muss er dann das Filter so setzen, dass nur jede vierte oder fünfte Notifikation weitergeleitet wird. Die Zusatzinformation könnte in diesem Fall z. B. die Werte {2} v {2, 8} v {2, 10} annehmen.

Die konkrete Umsetzung der Subvariante C12 (Agent bestimmt Zeitintervall aufgrund der Wünsche der Manager) könnte folgendermaßen geregelt sein:

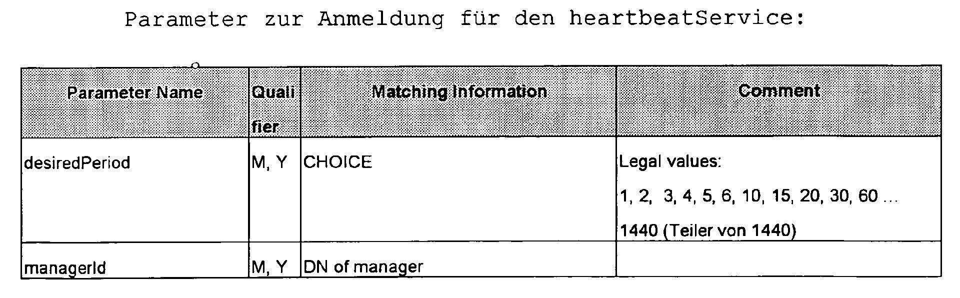

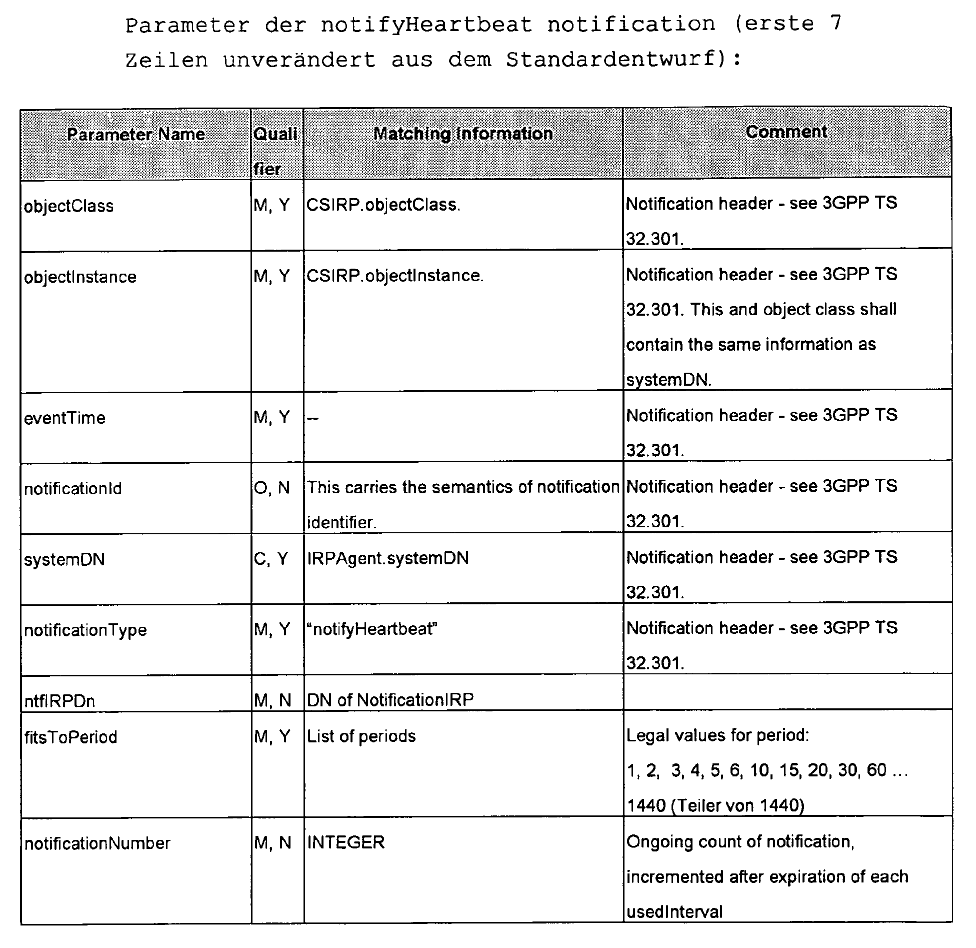

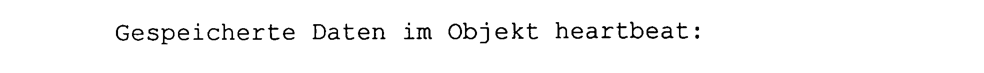

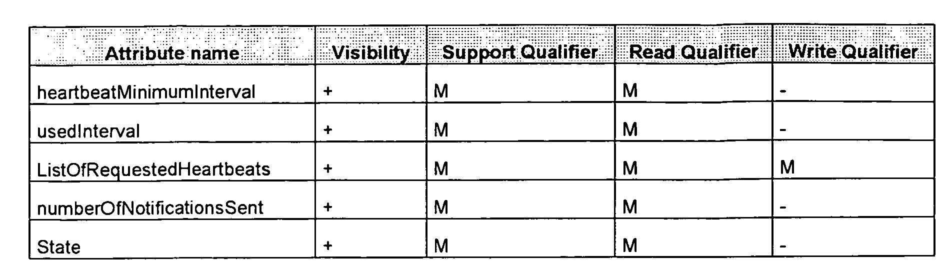

Single entries of ListOfRequestedHeartbeats contain:
- RequestedPeriod,
- RequestingManager.

State hat folgende Zustände:
negotiationPhase (Manager können Ihre desiredPeriods mitteilen)
preparationPhase (Verhandlungsphase ist abgeschlossen, usedInterval wird ermittelt)
heartbeatPhase (heartbeatNotifications werden versendet)

### Beispiel:

Es beteiligen sich an der negotiationPhase:
Manager A: wünscht 5 Minuten Intervall,
Manager B: wünscht 10 Minuten Intervall,
Manager C: wünscht 15 Minuten Intervall
Agent wählt UsedIntervall = 5 Minuten und meldet dies den Managern A, B, C.

Die Filter würden wie folgt von den Mangern definiert:
Manager A:
   muss keinen Filter definieren, da er jede Notifikation haben will.
Manager B:
   'IF (notificationType= notifyHeartbeat AND (fitsToPeriod contains 2) ) THEN send to me ELSE discard'
Manager C:
   'IF (notificationType= notifyHeartbeat AND (fitsToPeriod contains 3) ) THEN send to me ELSE discard'
Manager D will stündliche Notifikation:
   ,IF (notificationType= notifyHeartbeat AND (fitsToPeriod contains 12) ) THEN send to me ELSE discard'

### Untervariante C2

Es ist auch möglich, Notifikationen zu beliebigen festgelegten Zeitpunkten intern zu generieren und an die Filter weiterzuleiten. Die Information über die Aussendezeitpunkte kann dann als Zusatzinformation in die Notifikationen eingefügt werden und die Manager können die Filter so setzen, dass nur bestimme Notifikationen weitergeleitet werden. Manager, die alle Notifikationen erhalten wollen, die entsprechend des Zeitpunkt-Musters ausgesendet werden, brauchen kein Filter zu setzen.

### Beispiel für Untervariante C2:

Die Notifikationen werden in einem beliebigen Minuten-Muster innerhalb einer Stunde (x), also z.B. x:05, x:15, x:35, x:50, x:51, x:52, x:53, x:54, x:55) intern generiert. Die Zusatzinformation kann dann z. B. einen der Werte {05}, {15}, {35}, {50}, {51}, {52}, {53}, {54}, {55} annehmen.
Wenn ein Manager nur Notifikationen um x:05 und um x:35 haben möchte, muss er auf die Präsenz der Werte {05} und {35} in der Notifikation filtern.

Die konkrete Umsetzung der Untervariante C2 (Agent bestimmt Zeitintervall aufgrund der Wünsche der Manager) könnte folgendermaßen geregelt sein:
Es ist keine Anmeldung durch den Manager nötig. Einrichten der Filter ist ausreichend. 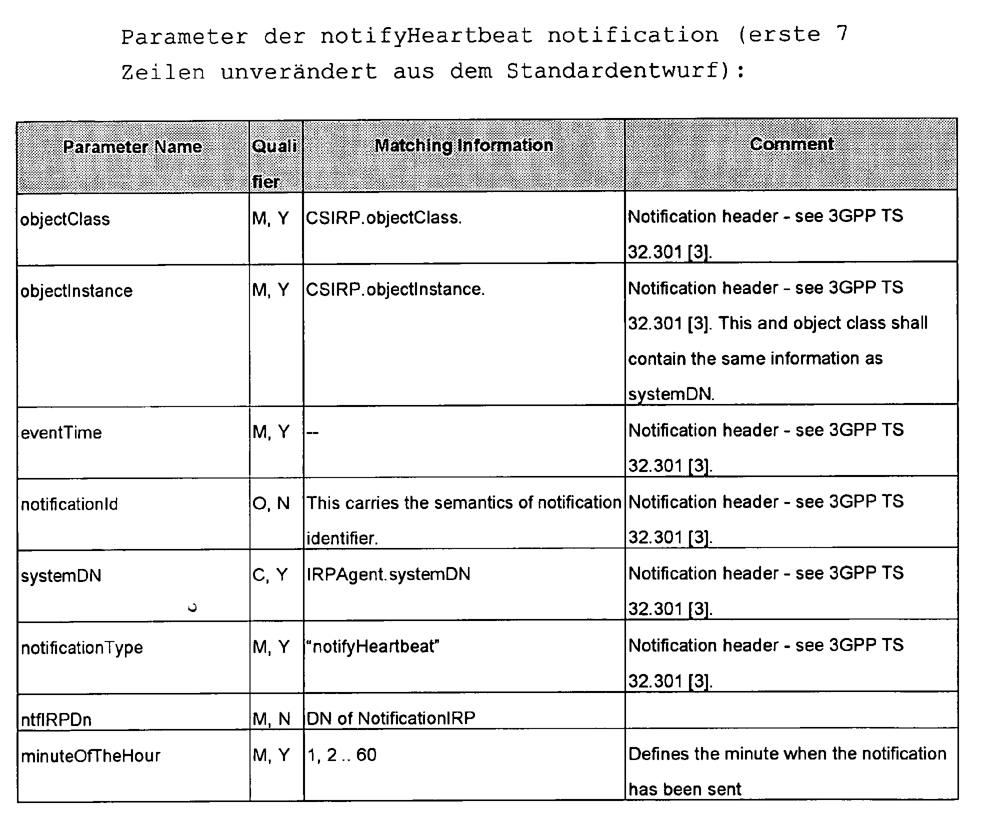 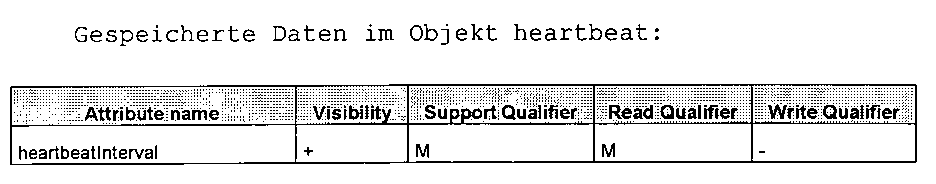
Manager A wünscht sich Notifikations um x:01, x:06, x:31, x:36 Uhr.
Er fragt das heartbeatInterval ab - dies soll hier 1 Minute sein - und richtet in diesem Fall folgende Filter ein:
   ,IF (notificationType= notifyHeartbeat AND (minuteOfTheHour=1 OR minuteOfTheHour=6 OR minuteOfTheHour=31 OR minuteOfTheHour=36)) THEN send to me ELSE discard'

## Patentansprüche

1. Verfahren zur Überwachung von Verbindungen in einem Managementsystem eines Kommunikationsnetzes,
wobei das Managementsystem mehrere Manager (NMC₁, NMC₂, NMC₃, NMCₖ) und zumindest einen Agenten (OMC₁, OMC₂, OMC₃, OMCₙ) als Einrichtungen in verschiedenen Managementebenen (NM level, EM level) umfasst,
wobei der zumindest eine Agent (OMC₁, OMC₂, OMC₃, OMCₙ) an zumindest zwei mit ihm verbundene Manager (NMC₁, NMC₂, NMC₃, NMCₖ) periodische Notifikationen eines Heartbeat-Service sendet,
**dadurch gekennzeichnet,**
**dass** den zumindest zwei Managern (NMC₁, NMC₂, NMC₃, NMCₖ) eine unterschiedliche Periode für die Notifikationen des Heartbeat-Service vom zumindest einen Agenten (OMC₁, OMC₂, OMC₃, OMCₙ) zugeordnet wird.

2. Verfahren nach Anspruch 1, **dadurch gekennzeichnet, dass** jeder der zumindest zwei Manager (NMC₁, NMC₂, NMC₃, NMCₖ) die periodischen Notifikationen des Heartbeat-Service unter Einsatz von Filtereinrichtungen (Filter) erfasst.

3. Verfahren nach Anspruch 1 oder 2, **dadurch gekennzeichnet, dass** als Objektinstanz mindestens ein Heartbeat-Objekt vorgesehen ist, welches mit der Periode für die Notifikationen des Heartbeat-Service diese Notifikationen sendet.

4. Verfahren nach Anspruch 3, **dadurch gekennzeichnet, dass** jedem der zumindest zwei Manager (NMC₁, NMC₂, NMC₃, NMCₖ) ein Heartbeat-Objekt zugeordnet ist.

5. Verfahren nach einem der Ansprüche 1 bis 4, **dadurch gekennzeichnet , dass** die Notifikationen des Heartbeat-Service Parameterinformation über die Identität wenigstens eines der zumindest zwei Manager (NMC₁, NMC₂, NMC₃, NMCₖ) umfassen.

6. Verfahren nach einem der Ansprüche 1, 2, 3 oder 5, **dadurch gekennzeichnet, dass** mindestens eine Notifikation des Heartbeat-Service für mehrere Manager (NMC₁, NMC₂, NMC₃, NMCₖ) bestimmt ist.

7. Verfahren nach Anspruch 6, **dadurch gekennzeichnet, dass** der zumindest eine Agent (OMC₁, OMC₂, OMC₃, OMCₙ) bei Übereinstimmung eines von mehreren Managern (NMC₁, NMC₂, NMC₃, NMCₖ) gewünschten Empfangszeitpunktes der Notifikationen des Heartbeat-Service eine einzige Notifikation für diese mehreren Manager (NMC₁, NMC₂, NMC₃, NMCₖ) erzeugt.

8. Verfahren nach Anspruch 7, **dadurch gekennzeichnet, dass** der zumindest eine Agent (OMC₁, OMC₂, OMC₃, OMCₙ) für jeden der mehreren Manager (NMC₁, NMC₂, NMC₃, NMCₖ) die Periode für die Notifikationen des Heartbeat-Service festlegt.

9. Verfahren nach Anspruch 8, **dadurch gekennzeichnet, dass** die mehreren Manager (NMC₁, NMC₂, NMC₃, NMCₖ) den zumindest einen Agenten (OMC₁, OMC₂, OMC₃, OMCₙ) über ihre bevorzugte Periode für die Notifikationen des Heartbeat-Service informieren.

10. Verfahren nach einem der Ansprüche 8 oder 9, **dadurch gekennzeichnet , dass** die Perioden für die Notifikationen des Heartbeat-Service als ganzzahliges Vielfaches eines Grundintervalls gewählt werden.

11. Verfahren nach Anspruch 8 oder 9, **dadurch gekennzeichnet, dass** die Periode für die Notifikationen des Heartbeat-Service aus einem periodischen Zeitschema in Form eines periodisch sich wiederholenden Musters von Aussendezeitpunkten für die Notifikationen des Heartbeat-Service besteht.

12. Verfahren nach Anspruch 6, **dadurch gekennzeichnet, dass** die Notifikationen des Heartbeat-Service Parameterinformation über den Aussendezeitpunkt der Notifikationen des Heartbeat-Service umfassen.

13. Verfahren nach Anspruch 11, **dadurch gekennzeichnet, dass** die Notifikationen des Heartbeat-Service periodisch in einem festen Zeitintervall gesendet werden.

14. Verfahren nach Anspruch 12, **dadurch gekennzeichnet, dass** der zumindest eine Agent (OMC₁, OMC₂, OMC₃, OMCₙ) das feste Zeitintervall für die Notifikationen des Heartbeat-Service festlegt.

15. Verfahren nach Anspruch 13, **dadurch gekennzeichnet, dass** die mehreren Manager (NMC₁, NMC₂, NMC₃, NMCₖ) den zumindest einen Agenten (OMC₁, OMC₂, OMC₃, OMCₙ) über ein bevorzugtes festes Zeitintervall für die Notifikationen des Heartbeat-Service informieren.

16. Verfahren nach Anspruch 11, 12, 13, 14 oder 15, **dadurch gekennzeichnet, dass** anstelle des Sendens der Notifikationen des Heartbeat-Service in einem festen Zeitintervall das Senden in einem periodischen Zeitschema in Form eines periodisch sich wiederholenden Musters von Aussendezeitpunkten für die Notifikationen des Heartbeat-Service vorgesehen ist.

17. Agent (OMC₁, OMC₂, OMC₃, OMCₙ) eines Managementsystems eines Kommunikationsnetzes zur Überwachung von Verbindungen in dem Managementsystem des Kommunikationsnetzes als eine von zumindest zwei Managementeinrichtungen des Managementsystems in verschiedenen Managementebenen (NM LEVEL, EM LEVEL, NE LEVEL),
wobei der Agent (OMC₁, OMC₂, OMC₃, OMCₙ) Mittel zum Senden von periodischen Notifikationen eines Heartbeat-Service an zumindest zwei mit ihm verbundene Manager (NMC₁, NMC₂, NMC₃, NMCₖ) aufweist,
**dadurch gekennzeichnet,**
**dass** Mittel vorhanden sind, um den zumindest zwei Managern (NMC₁, NMC₂, NMC₃, NMCₖ) eine unterschiedliche Periode für die Notifikationen des Heartbeat-Service vom Agenten (OMC₁, OMC₂, OMC₃, OMCₙ) zuzuordnen.

18. Agent (OMC₁, OMC₂, OMC₃, OMCₙ) nach Anspruch 17, **dadurch gekennzeichnet , dass** Mittel zum Senden der Notifikationen mit Parameterinformation über die Identität wenigstens eines der zumindest zwei Manager (NMC₁, NMC₂, NMC₃, NMCₖ) vorhanden sind.

19. Agent (OMC₁, OMC₂, OMC₃, OMCₙ) nach Anspruch 17 oder 18, **dadurch gekennzeichnet, dass** Mittel zum Senden mindestens einer Notifikation des Heartbeat-Service an mehrere Manager (NMC₁, NMC₂, NMC₃, NMCₖ) vorgesehen sind.

20. Agent (OMC₁, OMC₂, OMC₃, OMCₙ) nach Anspruch 19, **dadurch gekennzeichnet, dass** Mittel zum Erzeugen einer einzigen Notifikation für mehrere Manager (NMC₁, NMC₂, NMC₃, NMCₖ) bei Übereinstimmung eines von diesen mehreren Managern (NMC₁, NMC₂, NMC₃, NMCₖ) gewünschten Empfangszeitpunktes der Notifikationen des Heartbeat-Service vorgesehen sind.

21. Agent (OMC₁, OMC₂, OMC₃, OMCₙ) nach Anspruch 20, **dadurch gekennzeichnet, dass** Mittel zur Festlegeung der Periode für die Notifikationen des Heartbeat-Service für jeden der mehreren Manager (NMC₁, NMC₂, NMC₃, NMCₖ) vorhanden sind.

22. Agent (OMC₁, OMC₂, OMC₃, OMCₙ) nach Anspruch 19, **dadurch gekennzeichnet, dass** Mittel zum Senden der Notifikationen mit Parameterinformation über den Aussendezeitpunkt der Notifikationen des Heartbeat-Service vorgesehen sind.

23. Agent (OMC₁, OMC₂, OMC₃, OMCₙ) nach Anspruch 22, **dadurch gekennzeichnet, dass** Mittel zum Senden der Notifikationen in einem festen Zeitintervall vorgesehen sind.

24. Agent (OMC₁, OMC₂, OMC₃, OMCₙ) nach einem der Ansprüche 17 bis 23, **dadurch gekennzeichnet, dass** der der Agent Mittel zur Durchführung des Verfahrens nach einem der Ansprüche 1 bis 16 umfasst.

25. Managementsystem eines Kommunikationsnetzes zur Überwachung von Verbindungen im Managementsystem mit zumindest zwei Managementeinrichtungen in verschiedenen Managementebenen (NM LEVEL, EM LEVEL, NE LEVEL),
wobei das Managementsystem mehrere Manager (NMC₁, NMC₂, NMC₃, NMCₖ) und zumindest einen Agenten (OMC₁, OMC₂, OMC₃, OMCₙ) als Einrichtungen in verschiedenen Managementebenen (NM level, EM level) umfasst,
wobei der zumindest eine Agent (OMC₁, OMC₂, OMC₃, OMCₙ) Mittel zum Senden von periodischen Notifikationen eines Heartbeat-Service an zumindest zwei mit ihm verbundene Manager (NMC₁, NMC₂, NMC₃, NMCₖ) aufweist,
**dadurch gekennzeichnet, dass** Mittel zur Durchführung des Verfahrens nach einem der Ansprüche 1 bis 16 vorgesehen sind.

26. Managementsystem nach Anspruch 25, **dadurch gekennzeichnet, dass** das Kommunikationssystem zumindest einen Agent (OMC₁, OMC₂, OMC₃, OMCₙ) nach einem der Ansprüche 17 bis 24 umfasst.
